# FASCICULE DE BREVET EUROPEEN

(11) **EP 2 088 033 B1**
(45) Date de publication et mention de la délivrance du brevet: **20.10.2010**
(21) Numéro de dépôt: 09290086.9
(22) Date de dépôt: 04.02.2009
(51) Int. Cl.: B60R 5/04

(54) **Cache bagages pour véhicule automobile comprenant un rideau renforcé par un réseau de fils**
Laderaumabdeckung für ein Kraftfahrzeug mit einem mit einem Drahtgewebe verstärkten Abdeckrollo
Luggage space cover for a motor vehicle comprising a roller blind reinforced by a wire-mesh

(30) Priorité: 08.02.2008 FR 0800689; 28.03.2008 FR 0801736
(43) Date de publication de la demande: 12.08.2009
(73) Titulaire: Centre d'Etude et de Recherche pour l'Automobile (CERA), 51100 Reims (FR)
(72) Inventeur: Damotte, Alain, 51100 Reims (FR); De Vismes, Bertrand, 78000 Versailles (FR)
(74) Mandataire: Sayettat, Julien Christian

(56) Documents cités:
- EP-A- 1 433 660
- EP-A- 1 695 871
- WO-A-2006/092227
- DE-A1- 4 206 897
- JP-A- 10 119 158
- JP-A- 11 034 744
- JP-A- 11 058 566
- NL-A- 7 010 602

## Description

L'invention concerne un cache bagages pour véhicule automobile comprenant un rideau d'occultation et des procédés de réalisation d'un rideau d'un tel cache bagages.

Il est connu de réaliser un cache bagages pour véhicule automobile, ledit cache bagages comprenant un rideau, ledit rideau comprenant une couche matricielle - notamment à base de matériau plastique ou à base de matériau fibreux aiguilleté -, ladite couche pouvant être renforcée par une nappe de renfort, ledit cache bagages comprenant en outre un moyen de raidissement d'un premier bord extrême dudit rideau et un moyen de raidissement d'un deuxième bord extrême dudit rideau, opposé audit premier bord extrême, afin de permettre une mise en tension dudit rideau entre lesdits bords.

Dans le cas où le rideau comprend une nappe de renfort, cette dernière peut en particulier être à base de tissu, voire de non tissé.

Les rideaux correspondant à de telles réalisations présentent - du fait de la présence de la nappe de renfort ou du fait de l'épaisseur à donner à la couche matricielle pour lui conférer une bonne résistance en traction - une épaisseur importante, ce qui induit un poids et un coût important et éventuellement un espace de stockage volumineux du rideau à l'état non déployé.

Une nappe de renfort qui comprend un réseau de fils strictement rectilignes est connue dans un rideau pare-soleil du document DE-A-4 206 097
EP-A-1695871 décrit un cache bagages selon le préambule de la revendication 1.

L'invention vise à pallier ces inconvénients en proposant un cache bagages pourvu d'un rideau d'occultation qui présente une épaisseur moindre que les rideaux connus, tout en présentant une bonne résistance en traction.

A cet effet, et selon un premier aspect, l'invention propose un cache bagages pour véhicule automobile, ledit cache bagages comprenant un rideau, ledit rideau comprenant une couche matricielle renforcée par une nappe de renfort, ledit cache bagages comprenant en outre un moyen de raidissement d'un premier bord extrême dudit rideau et un moyen de raidissement d'un deuxième bord extrême dudit rideau, opposé audit premier bord extrême, ladite nappe de renfort comprenant un réseau de fils longitudinaux strictement rectilignes.

Un tel agencement permet au rideau, on l'explicitera par la suite, de présenter une épaisseur moindre que les rideaux connus, tout en présentant une bonne résistance en traction.

Selon un deuxième aspect, l'invention concerne des procédés de réalisation d'un rideau d'un tel cache bagages.

D'autres objets et avantages de l'invention apparaîtront au cours de la description qui suit, faite en référence aux figures annexées dans lesquelles :
- la figure 1 est une représentation schématique en perspective d'un cache bagages selon un premier mode de réalisation, le rideau étant déployé,
- la figure 2 est une représentation schématique de face d'une nappe de rideau de cache bagages selon une première réalisation,
- la figure 3 est une représentation schématique de face d'une nappe de rideau de cache bagages selon une deuxième réalisation,
- la figure 4 est une représentation schématique en perspective éclatée d'un cache bagages selon un deuxième mode de réalisation.

En référence aux figures, on décrit un cache bagages 1 pour véhicule automobile, ledit cache bagages comprenant un rideau 2, ledit rideau comprenant une couche matricielle renforcée par une nappe 3 de renfort, ledit cache bagages comprenant en outre un moyen de raidissement 10 d'un premier bord 5 extrême dudit rideau et un moyen de raidissement 4 d'un deuxième bord 6 extrême dudit rideau, opposé audit premier bord extrême, ladite nappe de renfort comprenant un réseau de fils 7 longitudinaux strictement rectilignes.

La couche matricielle peut être à base de matériau plastique, par exemple à base de polychlorure de vinyle (PVC).

Selon une autre réalisation, la couche matricielle peut être à base de matériau fibreux aiguilleté.

Selon une autre réalisation, la couche matricielle peut être à base de textile tricoté, voire tissé.

De façon plus générale, la couche matricielle peut être à base de tout matériau souple permettant de réaliser un rideau 2.

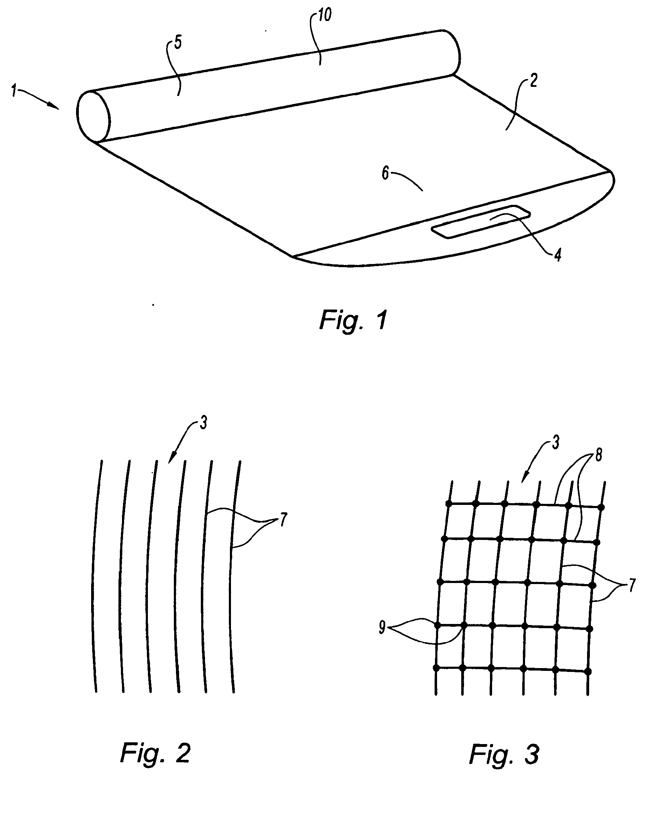

Selon la réalisation de la figure 1, le moyen de raidissement 10 est par exemple de type enrouleur à ressort et le moyen 4 sous la forme d'une bavette rigide, de sorte que le cache bagages 1 soit à rideau 2 enroulable. En variante, le moyen 10 peut se présenter sous la forme d'une barre, de sorte que le cache bagages 1 soit de type « hamac », le rideau 2 étant déployé entre les moyens de raidissement 4,10 lorsque l'on veut masquer les bagages.

Les moyens de raidissement 10,4 de la réalisation de la figure 1 comprennent des moyens d'accrochage au véhicule de sorte que le rideau 2 puisse être déployé sensiblement à plat en configuration de recouvrement des bagages.

Les moyens d'accrochage, non représentés, peuvent par exemple se présenter sous la forme de saillies prévues en extrémités des moyens 4,10, lesdites saillies étant destinées à coopérer avec des moyens de réception prévus par exemple sur les garnitures latérales du compartiment à bagages.

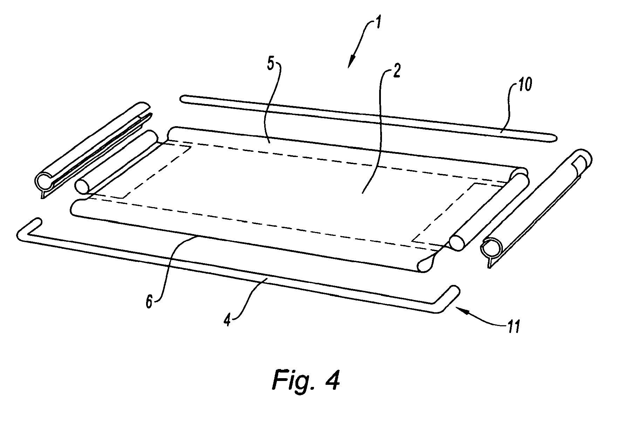

Selon la réalisation de la figure 4, le cache bagages 1 comprend un cadre 11 rigide à l'intérieur duquel est tendu le rideau 2, le montant avant dudit cadre formant moyen de raidissement 10 et son montant arrière formant moyen de raidissement 4.

Dans ce mode de réalisation, le rideau 2 est déployé en permanence et ne présente pas d'état non déployé.

Les fils 7 sont par exemple à base de polyester ou de verre. Par des fils 7 « longitudinaux », on entend des fils s'étendant perpendiculairement aux bords extrêmes 5,6, lesdits fils étant donc parallèles entre eux.

Par des fils 7 « strictement rectilignes », on entend des fils ne présentant pas, lorsque la nappe 3 est mise à plat, l'ondulation observée par exemple dans un tissu, du fait de leur entrecroisement avec des fils de trame.

Les fils 7 étant strictement rectilignes, ils ont un effet très efficace de limitation de l'allongement du rideau 2 lorsqu'une traction est exercée longitudinalement, contrairement au cas où les fils présentent une ondulation.

Selon une première réalisation représentée en figure 2, la nappe 3 comprend exclusivement le réseau de fils 7 longitudinaux.

Le fait de n'avoir qu'une épaisseur de fils 7 permet de réduire l'épaisseur de la nappe 3 de l'ordre de 50% par rapport à un tissu comprenant les mêmes fils.

Un procédé de réalisation d'un rideau 2 comprenant une telle nappe 3 peut comprendre l'étape de faire défiler en continu un réseau de fils 7 parallèles entre eux de sorte à former ladite nappe destinée à être associée à la couche matricielle.

Selon une deuxième réalisation, représentée en figure 3, les fils 7 longitudinaux sont reliés entre eux par des fils 8 transversaux croisés - et non entrecroisés comme c'est le cas pour un tissu où les fils de chaîne passent alternativement au dessus et en dessous des fils de trame - lesdits fils longitudinaux et transversaux étant fixés respectivement les uns aux autres en leurs points d'intersection 9, de sorte que la nappe 3 soit sous la forme d'une grille.

Le fait que les fils longitudinaux 7 et transversaux 8 ne s'entrecroisent pas permet de réduire l'épaisseur de la nappe 3 de l'ordre de 20% par rapport à un tissu comprenant les mêmes fils.

Les fils longitudinaux 7 et transversaux 8 peuvent être fixés en leurs points d'intersection 9 par exemple par collage ou par soudure.

De préférence, dans les réalisations présentées, la nappe 3 est associée à la couche matricielle selon un procédé de production en continu.

Dans le cas d'une couche matricielle à base de matériau plastique, le procédé de réalisation du rideau 2 peut prévoir d'appliquer ladite couche de matériau plastique sur la nappe 3 par raclage, par extrusion ou par calandrage à chaud.

Dans le cas d'une couche matricielle à base de matériau fibreux aiguilleté, le procédé de réalisation du rideau 2 peut prévoir d'associer ladite couche de matériau fibreux à la nappe 3 par entremêlement des fibres de ladite couche de matériau fibreux avec ladite nappe.

Plus particulièrement, l'entremêlement peut être réalisé par jet d'eau ou lors de l'aiguilletage par mise en place de la nappe 3 en regard de la couche de matériau fibreux avant aiguilletage.

L'association de la couche matricielle à la nappe 3 peut être faite par d'autres modes d'association tels que le soudage ou le collage.

Selon les cas, la nappe 3 est noyée dans la couche matricielle ou bien apparente, notamment en face d'envers du rideau 2, la face d'aspect étant formée du matériau de ladite couche matricielle qui peut être pourvu d'un motif, par exemple un grainage obtenu par calandrage à chaud.

## Revendications

1. Cache bagages (1) pour véhicule automobile, ledit cache bagages comprenant un rideau (2), ledit rideau comprenant une couche matricielle renforcée par une nappe (3) de renfort, ledit cache bagages comprenant en outre un moyen de raidissement (10) d'un premier bord (5) extrême dudit rideau et un moyen de raidissement (4) d'un deuxième bord (6) extrême dudit rideau, opposé audit premier bord extrême, ledit cache bagages étant **caractérisé en ce que** ladite nappe de renfort comprend un réseau de fils (7) longitudinaux strictement rectilignes.

2. Cache bagages selon la revendication 1, **caractérisé en ce que** la couche matricielle est à base de matériau plastique.

3. Cache bagages selon la revendication 1, **caractérisé en ce que** la couche matricielle est à base de matériau fibreux aiguilleté.

4. Cache bagages selon l'une quelconque des revendications 1 à 3, **caractérisé en ce que** la nappe (3) comprend exclusivement le réseau de fils longitudinaux (7).

5. Cache bagages selon l'une quelconque des revendications 1 à 3, **caractérisé en ce que** les fils longitudinaux (7) sont reliés entre eux par des fils transversaux (8) croisés, lesdits fils longitudinaux et transversaux étant fixés respectivement les uns aux autres en leurs points d'intersection (9), de sorte que la nappe (3) soit sous la forme d'une grille.

6. Cache bagages selon l'une quelconque des revendications 1 à 5, **caractérisé en ce que** les moyens de raidissement (4,10) comprennent des moyens d'accrochage au véhicule de sorte que le rideau (2) puisse être déployé sensiblement à plat en configuration de recouvrement des bagages.

7. Cache bagages selon l'une quelconque des revendications 1 à 5, **caractérisé en ce qu'**il comprend un cadre (11) rigide à l'intérieur duquel est tendu le rideau (2), le montant avant dudit cadre formant moyen de raidissement (10) et son montant arrière formant moyen de raidissement (4).

8. Procédé de réalisation d'un rideau (2) de cache bagages selon l'une quelconque des revendications 1 à 7, **caractérisé en ce que** la nappe (3) est ' associée à la couche matricielle selon un procédé de production en continu.

9. Procédé selon la revendication 8, lorsqu'elle se rattache à la revendication 4, **caractérisé en ce qu'**il comprend l'étape de faire défiler un réseau de fils (7) parallèles entre eux de sorte à former une nappe (3) comprenant exclusivement le réseau de fils (7) longitudinaux, ladite nappe étant destinée à être associée à la couche matricielle.

## Claims

1. Load space cover (1) for motor vehicle, said load space cover comprising a curtain (2), said curtain comprising a matrix layer reinforced by a reinforcement ply (3), said load space cover further comprising a means of stiffening (10) of a first extreme edge (5) of said curtain and a means of stiffening (4) of a second extreme edge (6) of said curtain, opposite said first extreme edge, said load space cover being **characterised in that** said reinforcement ply comprises a network of strictly rectilinear longitudinal wires (7).

2. Load space cover according to claim 1, **characterised in that** the matrix layer is of a plastic material base.

3. Load space cover according to claim 1, **characterised in that** the matrix layer is of a needle-bonded material.

4. Load space cover according to any of claims 1 to 3, **characterised in that** the ply (3) exclusively comprises the network of longitudinal wires (7).

5. Load space cover according to any of claims 1 to 3, **characterised in that** the longitudinal wires (7) are connected together by crossed transversal wires (8), said transversal and longitudinal wires being fixed respectively to one another at their points of intersection (9), in such a way that the ply (3) is in the form of a grid.

6. Load space cover according to any of claims 1 to 5, **characterised in that** the means of stiffening (4,10) include means for hooking to the vehicle in such a way that the curtain (2) can be deployed substantially flat in a configuration for covering luggage.

7. Load space cover according to any of claims 1 to 5, **characterised in that** it comprises a rigid frame (11) wherein is stretched the curtain (2), the front riser of said frame forming a means of stiffening (10) and its rear riser forming a means of stiffening (4).

8. Method for producing a curtain (2) for load space cover according to any of claims 1 to 7, **characterised in that** the ply (3) is associated to the matrix layer according to a method of continuous production.

9. Method according to claim 8, when it is attached to claim 4, **characterised in that** it comprises the step of streaming a network of wires (7) parallel to one another in such a way as to form a ply (3) exclusively comprising the network of longitudinal wires (7), said ply being intended to be associated to the matrix layer.

## Patentansprüche

1. Kofferraumabdeckung (1) für ein Kraftfahrzeug, wobei die Kofferraumabdeckung ein Rollo (2) umfasst, wobei das Rollo eine Matrixschicht umfasst, die durch ein Verstärkungsflächengebilde (3) verstärkt wird, wobei die Kofferraumabdeckung ferner ein Versteifungsmittel (10) eines ersten Außenrandes (5) des Rollos und ein Versteifungsmittel (4) eines zweiten Außenrandes (6) des Rollos umfasst, der dem ersten Außenrand gegenüberliegt, wobei die Kofferraumabdeckung **dadurch gekennzeichnet ist, dass** das Verstärkungsflächengebilde ein Netz aus streng geradlinigen Längsfäden (7) umfasst.

2. Kofferraumabdeckung nach Anspruch 1, **dadurch gekennzeichnet, dass** die Matrixschicht auf Basis eines Kunststoffmaterials hergestellt ist.

3. Kofferraumabdeckung nach Anspruch 1, **dadurch gekennzeichnet, dass** die Matrixschicht auf Basis eines Nadelvliesmaterials hergestellt ist.

4. Kofferraumabdeckung nach einem der Ansprüche 1 bis 3, **dadurch gekennzeichnet, dass** das Flächengebilde (3) ausschließlich das Netz aus Längsfäden (7) umfasst.

5. Kofferraumabdeckung nach einem der Ansprüche 1 bis 3, **dadurch gekennzeichnet, dass** die Längsfäden (7) durch gekreuzte Querfäden (8) miteinander verbunden sind, wobei die Längs- und Querfäden jeweils an ihren Schnittpunkten (9) aneinander befestigt sind, so dass das Flächengebilde (3) die Form eines Gitters aufweist.

6. Kofferraumabdeckung nach einem der Ansprüche 1 bis 5, **dadurch gekennzeichnet, dass** die Versteifungsmittel (4, 10) Mittel zum Befestigen am Fahrzeug umfassen, so dass das Rollo (2) in der Konfiguration einer Heckablage im Wesentlichen flach ausgezogen werden kann.

7. Kofferraumabdeckung nach einem der Ansprüche 1 bis 5, **dadurch gekennzeichnet, dass** sie einen starren Rahmen (11) umfasst, innerhalb dessen das Rollo (2) gespannt ist, wobei die vordere Verstrebung des Rahmens ein Versteifungsmittel (10) bildet und seine hintere Verstrebung ein Versteifungsmittel (4) bildet.

8. Verfahren zur Herstellung eines Rollos (2) einer Kofferraumabdeckung nach einem der Ansprüche 1 bis 7, **dadurch gekennzeichnet, dass** das Flächengebilde (3) mit der Matrixschicht gemäß einem Endlosproduktionsverfahren verbunden wird.

9. Verfahren nach Anspruch 8, wenn abhängig von Anspruch 4, **dadurch gekennzeichnet, dass** es einen Schritt des Abrollenlassens eines Netzes aus parallel zueinander verlaufenden Fäden (7) umfasst, so dass ein Flächengebilde (3) gebildet wird, das ausschließlich das Netz aus Längsfäden (7) umfasst, wobei das Flächengebilde dazu bestimmt ist, mit der Matrixschicht verbunden zu werden.
